# EUROPÄISCHE PATENTSCHRIFT

(11) **EP 1 730 442 B1**
(45) Veröffentlichungstag und Bekanntmachung des Hinweises auf die Patenterteilung: **20.08.2014**
(21) Anmeldenummer: 05716389.1
(22) Anmeldetag: 21.03.2005
(51) Int. Cl.: F23D 14/58, F23D 14/66, F23D 14/78, F23D 14/22, F23C 5/06

(54) **GASINJEKTOR**
GAS INJECTOR
INJECTEUR DE GAZ

(30) Priorität: 23.03.2004 DE 102004014896
(43) Veröffentlichungstag der Anmeldung: 13.12.2006
(73) Patentinhaber: Software & Technologie Glas GmbH (STG), 03058 Kiekebusch (DE)
(72) Erfinder: BIRLE, Andreas, 03044 Cottbus (DE); HEMMANN, Peter, 09599 Freiberg (DE); HEELEMANN, Helmut, 03058 Kiekebusch (DE)
(74) Vertreter: Eisenführ Speiser
(86) Internationale Anmeldenummer: PCT/EP2005/003210
(87) Internationale Veröffentlichungsnummer: WO 2005/095857

(56) Entgegenhaltungen:
- EP-A- 0 513 414
- EP-A1- 0 091 344
- DE-A1- 10 224 769
- DE-A1- 19 520 650
- US-A- 5 620 316

## Beschreibung

Die Erfindung betrifft einen Gasbrenner bzw. Gasinjektor, nämlich einen Brenngasinjektor mit Diffusor gemäß dem Oberbegriff des Anspruchs 1. Dieser ist durch Stelthandlungen in weitem Bereich als Freistrahlbrenner modifizierbar und besonders für Industrieöfen mit regenerativer Luftvorwärmung geeignet, insbesondere denjenigen, die eine getrennt vom Brenngas angeordnete Luftzuführung aufweisen. Die Erfindung betrifft auch einen Industrieofen mit dem Brenngasinjektor.

Es ist bekannt, dass primäre NOx-Minderungsmaßnahmen bei konventionell beheizten Hochtemperaturwannenöfen, insbesondere bei Glasschmelzwannen, besonders wirkungsvoll bei der Technologie der Brennstoffeinbringung greifen. Es wurden zwar auch große Anstrengungen unternommen, um die Ofengeometrien und das Design der Verbrennungsluftzuführung hinsichtlich des Schadstoffausstoßes zu optimieren, aber nicht zuletzt auf Grund der hohen Anlagenlaufzeiten von mehr als 10 Jahren, in denen bauliche Verhältnisse festgelegt sind, greifen diese Maßnahmen erst sehr spät, sind in ihrer Anzahl stark begrenzt und Fehlentwicklungen können erst nach Ende der Ofenreise rückgängig gemacht werden. Weiterhin ist bekannt, dass primäre NOx-Minderungsmaßnahmen, wenn technologisch richtig angewendet, mit Energieeinsparung, Leistungssteigerung, Laufzeitverlängerung und Qualitätssicherung verbunden sind, jedoch auch Maß an Sensorik und intelligenter Automation sowie Aufmerksamkeit des Betreiberpersonals erfordern, um das erreichte hohe Niveau der Effektivität und Schadstoffminderung zu halten.

Dem Grundgedanken der NOx-Minderung bei Hochtemperaturprozessen, wie der Glasschmelze, folgend sind aus DE 195 20 650 A1 Brenner-Düsensteinkombinationen und aus DE 102 24 769 Freistrahlbrenner mit Öffnungswinkel um 20° und minimalem Mündungsdurchmesser von 70 mm in zylindrischer Brennereinsatzbohrung ohne nachgeordneten Düsenstein bekannt geworden, die durch niederturbulente Brenngaseinbringung eine verzögerte Mischung von Brenngas und Verbrennungsluft erzeugen und mit abgesenkten Flammenwurzeltemperaturen in einzelnen Anwendungen bezogen auf das Ausgangsniveau akzeptable NOx-Minderungseffekte erzielt haben.

Konstruktionen wie in DE 102 24 769 weisen keinerlei Möglichkeiten auf, auf Durchsatzschwankungen des typischen Leistungsbereiches zu reagieren, sondern sind mit turbulenzerzeugenden Zentraldüsen ausgestattet, die innen am Gaszuführungsrohr anliegend nur in vorderer Position wirksam sind und dort eine schnelle Entfernung vom NOx-mindernden Betrieb verursachen. Die alleinige Verringerung des Querschnittes der Diffusorwurzel reicht nicht aus, um die technologisch erforderliche Flammenform in Richtung und Länge auf veränderte Brennstoffdurchsätze anzupassen.

Bei geringem Durchsatz besteht das Problem, dass die Gasaustrittsgeschwindigkeit drastisch absinkt, wodurch die separat zugeführte Verbrennungsluft durch ihren deutlich höheren Impuls den Gasstrahl in der Weise zu stören vermag, dass die Freistrahlcharakteristik verloren geht und die gewünschte Positionierung der Flamme zum Wärmegut, die durch Richtung und Länge bestimmt ist, nicht mehr aktiv beeinflusst werden kann. Im extremen Fall saugt sich die Verbrennungsluft das Brenngas aus der Injektormündung und die ursprünglich beabsichtigte verzögerte Mischung und Startreaktion tritt bereits unmittelbar an der Abrisskante der Verbrennungsluftzuführung ein. Der Vorteil der bisher bekannt gewordenen Lösung, die Injektormündung ohne nachgeordneten Brennerdüsenstein im Verbrennungsraum anzuordnen, um den Kontakt des intermittierend zugeführten Brenngases mit dem Feuerfestmaterial zu vermeiden, wie es in der Ausführung DE 195 20 650 A1 auftritt, ist damit aufgehoben.

Aus EP 0 513 414 B1 sind Vorrichtungen bekannt, die durch axial verschiebbare konische Düsen unmittelbar an der Hauptaustrittsdüse verschiedene Strömungsverhältnisse realisieren.

Lösungen wie in EP 0 513 414 B1 sind mit dem Nachteil behaftet, dass der mit aufwendigen konischen Düsen einzustellende Gasstrahl nicht mit den zur optimalen verzögerten Mischung erforderlichen Auslaufstrecken ausgestattet ist und der nachgeordnete Düsenstein zusätzlich Turbulenzen verursacht.

Die Technologie der Brenngaseinbringung relativ zur baulich langfristig fixierten Luftzuführung ist bei den bekannten Lösungen mit teilweise erheblichen Nachteilen behaftet, die Gefahren für das Feuerfestmaterial und somit für die Produktqualität und die Anlagenlaufzeit hervorrufen oder die einen NOx-mindernden Betrieb in nur engem Bereich erlauben.

Somit sind die bekannten Lösungen den gestiegenen Anforderungen an die Qualität der Wärmeübertragung der Flamme an das Wärmegut, das Maß der NOx-Minderung und die Flexibilität der Befeuerung einer modernen Produktionsanlage nicht mehr gewachsen. Mit zunehmender Annäherung an das thermodynamische Optimum von Wärmeübertragung und Schadstoffminderung steigt der Bedarf an einfachen, beherrschbaren und reproduzierbaren Instrumenten, dieses Optimum stabil zu halten und die Vorteile voll in ökonomischen und ökologischen Nutzen umzusetzen.

Es ist deshalb die Aufgabe der Erfindung, die Nachteile der bekannten Techniken zu vermeiden, aber gleichzeitig die Vorteile des ungestörten Freistrahls bei gleichzeitiger Erweiterung des Arbeitsbereiches aufrechtzuerhalten.

Erfindungsgemäß wird diese Aufgabe durch einen Brenngasinjektor mit den Merkmalen gemäß Anspruch 1 und einem Industrieofen des Anspruchs 8 gelöst.

Der Inhalt der ursprünglich eingereichten Fassung von WO 2004/094910 ist lediglich hinsichtlich der Neuheit gemäß Art. 54.3 EPÜ relevant.

WO 2004/094910 offenbart auf Abbildung 4 und Seite 9, Zeile 27 bis Seite 10 Zeile 12 einen Brenner für pulverisierte Kohle oder andere feste Brennstoffe zur Produktion von

Wärme für verschiedene industrielle Zwecke. Eine Sauerstoffbrennstoffdüse weist Sauerstoffinjektionslöcher auf und eine Sauerstoffbrennstoffauslassöffnung. Die Löcher leiten Sauerstoff von einer Sauerstoffzuführungspassage durch Auslassöffnungen, die in einer inneren zylindrischen Oberfläche gebildet sind. Die Sauerstoffflusspassage leitet den Sauerstoff in eine Sauerstoffbrennstoffpassage, um diesen mit festem Brennstoff aus einem Brennstoffrohr zu mischen zu einem verbrennbaren Sauerstoffgemisch in der Passage und um dieses durch die Mündung abzugeben. Jedes der Sauerstoffinjektionslöcher ist angewinkelt und umfänglich beabstandet entlang einer kegelstumpfartigen Anordnung, wie dies in Fig. 4 gezeigt ist. Die Düse weist einen sich radial nach außen erstreckenden Wandbereich auf, der einer konischen Wand gegenüberliegt und eine Einlassöffnung für jedes Sauerstoffinjektionsloch umfasst. Die Löcher leiten Sauerstoff von der Sauerstoffflusspassage durch die Auslassöffnungen in der zylindrischen inneren Oberfläche an der umfänglichen Wand. Die Düse umfasst keine Sauerstoffauslasspassage, aber umfasst eine kegelstumpfförmige innere Oberfläche, die in einer stromabwärtigen Richtung divergiert und die Sauerstoffbrennstoffauslassöffnung abschließt.

Der erfinderische Gedanke bei der Gestaltung des vorliegenden Brenngasinjektors beruht auf dem Durchmesserverhältnis des Diffusors und der Einführung einer Doppelfreistrahltechnik. Mit dem neuen Konzept, das Durchmesserverhältnis von Mündung und Zuführungsrohr eng einzugrenzen, gelingt es in nahezu jedem Anwendungsfall in kürzester Zeit dem Gasstrom eine niederturbulente Freistrahlcharakteristik zu verleihen, ohne die erwähnten Nachteile in Kauf nehmen zu müssen. Die Charakteristik des Langdiffusors wird nicht von absoluten Dimensionen der Mündung bestimmt und begrenzt, sondern repräsentiert in weiten Bereichen strömungstechnisch optimale Bedingungen der Brenngaszuführung. Zeitraubende "trial and error"-Verfahren zur Bestimmung des optimalen Betriebspunktes entfallen, und die Parameter sind leicht auf andere Anlagen übertragbar. In durchgeführten Versuchen konnten die Einfahrphasen von mehreren Monaten auf wenige Wochen reduziert werden. Insbesondere die Gefahren für das Feuerfestmaterial, die durch verbesserte Wärmeübertragung und damit verbundene Absenkung des Brennstoffdurchsatzes und Verringerung des Gasimpulses auftreten können, werden ausgeschlossen. Negative Auswirkungen wie Auswaschungen und flächige Abplatzungen, die erst nach 1 bis 2 Jahren augenscheinlich werden, können damit vermieden werden.

Vorteilhafte Ausgestaltungen der Erfindung sind in den Unteransprüchen angegeben.

Die Erfindung wird nachfolgend anhand eines Ausführungsbeispiels unter Bezugnahme auf die Zeichnungen ausführlicher beschrieben.
- Fig. 1: zeigt die seitliche Schnittdarstellung des vorderen Teils eines erfindungsgemäßen, in eine Brennereinsatzöffnung eingebauten Gasinjektors.
- Fig. 2: zeigt einen Schnitt des gesamten erfindungsgemäßen Gasinjektors mit einer ersten Ausführungsform einer Schließ- und Regelungsvorrichtung.
- Fig. 3: zeigt einen Schnitt des gesamten erfindungsgemäßen Gasinjektors mit einer zweiten Ausführungsform einer Schließ- und Regelungsvorrichtung.

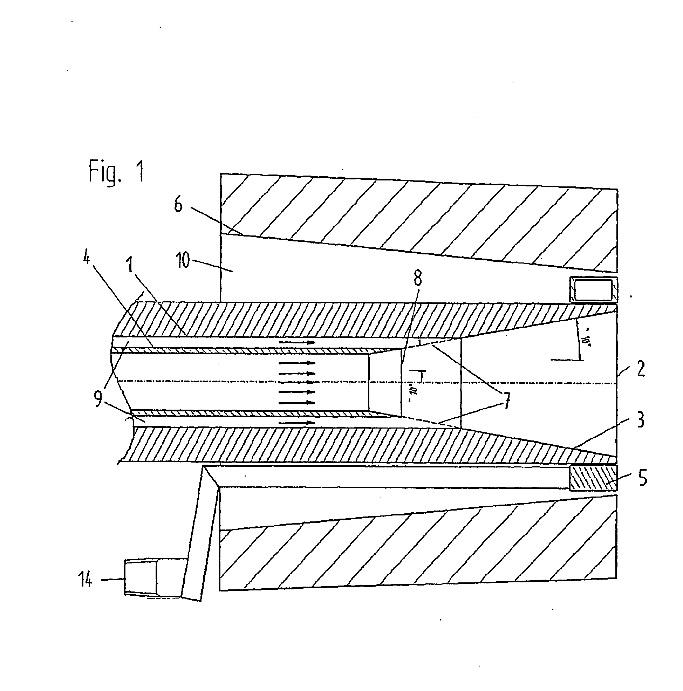

In Fig. 1 ist die Position eines erfindungsgemäßen Gasinjektors dargestellt, der durch die Lage der Mündung eines Langdiffusors 3 am Ende einer Brennereinsatzöffnung 6 bestimmt ist. Der erfindungsgemäße Gasinjektor ist mit einem Gaszuführungsrohr 1 und einer Mündung 2 ausgebildet, wobei die Verbindung zwischen dem Gaszuführungsrohr 1 und der Mündung 2 den Langdiffusor 3 mit einem Freistrahlöffnungswinkel bildet. Die erfindungsgemäße Ausführung des Langdiffusors 3, bestimmt durch das Durchmesserverhältnis von Mündung 2, und Gaszuführungsrohr 1 das kleiner als drei ist, gewährleistet die niederturbulente Brennstoffeinbringung in einem weiten Anwendungsspektrum.

In hohem Maße wird die Stabilität und Flexibilität der niederturbufenten Brennstoffzufuhr durch Einführung eines zweiten Freistrahls in der Wurzel des Langdiffusors 3 gesteigert. Dieser wird durch ein Zentraldüsenrohr 4 realisiert, dessen Mündung ebenfalls als Freistrahlöffnungswinkel, vorzugsweise von ungefähr 20°, ausgebildet ist. Die gedachte Verlängerung 7 der Mantellinie der Mündung 8 des Zentraldüsenrohres 4 geht direkt in die Mantellinie des Langdiffusors 3 über. Dabei ist das Zentraldüsenrohr 4 vorzugsweise im Gaszuführungsrohr 1 unter Ausbildung eines Ringspaltes 9 zwischen Zentraldüsenrohr 4 und dem Innenumfang des Gaszuführungsrohres 1 angeordnet. Vorzugsweise ist außerdem eine Schließ- und Regelungsvorrichtung 11 oder 16 zur Regelung der Teilströme durch das Zentraldüsenrohr 4 und den Ringspalt 9 vorgesehen. Dadurch ist eine zusätzliche Modifikation des Verhältnisses der Teilströme durch das Zentraldüsenrohr 4 und den Ringspalt 9 möglich und erlaubt die Einstellung eines niederturbulenten Freistrahls bei den verschiedensten Brennstoffdurchsätzen, da die Aufteilung der Teilströme in einer solchen Entfernung zur Mündung 8 erfolgt, dass beide niederturbulent in den Langdiffusor 3 eintreten und so trotz differierender Eingangsparameter die volle Wärmeübertragungsleistung und NOx-Minderungswirkung entfalten.

Stabilisierend und flexibilitätssteigernd wirkt auch die Anordnung eines wassergekühlten Ringes 5, der die meistens ganzmetallisch ausgeführte und luftgekühlte Mündung 2 vor thermischem Verschleiß schützt. Kühlwasseranschlüsse 14 führen das Kühlmedium an den Mündungsbereich des Injektors. Der wassergekühlte Ring 5 ist zwischen Vor- und Rücklauf des Kühlwasseranschlusses 14 durch eine Trennwand geschlossen, wodurch das Kühlwasser einmal durch den Hohlkörper des Ringes strömt und wieder austritt. Gleichzeitig bildet der Mündungskühlring 5 einen zwar kontaktfreien, aber nahen Abschluss zur Brennereinsatzöffnung 6 und verhindert damit unerwünschten Falschlufteinbruch. Die Brennereinsatzöffnung 6 ist in Strömungsrichtung vorzugsweise konisch verjüngt ausgebildet, so dass eine vertikale und horizontale Auswinkelung des gesamten Injektors in dem sich dahinter befindlichen Freiraum 10 möglich wird, so dass Richtung und Lage des Brennstofffreistrahls relativ zur eintretenden Verbrennungsluft und zum Wärmegut bestimmt werden können. Das Vorsehen einer sich in Strömungsrichtung konisch verjüngenden Brennereirisatzöffnung 6 gewährleistet und erweitert die gezielte Nutzung des Freiraumes 10 als Optimierungsparameter ohne den ausströmenden Freistrahl zu stören, wie es aus bisherigen Brenner-Düsensteinkombinationen bekannt ist. Um die volle Verfügbarkeit des Freiraumes 10 zur Auswinkelung des Injektors zu gewährleisten, ist der wassergekühlte Ring 5 vorzugsweise um die Achse des Injektors drehbar, wodurch der Kühlwasseranschluss 14 jeweils in den nicht zur Auswinkelung in Anspruch genommenen Teil des Freiraums 10 montierbar ist.

Die gemäß einer bevorzugten Ausführungsform vorgesehene Aufteilung der Teilströme im Zentraldüsenrohr 4 und Ringspalt 9 zwischen Gaszuführungsrohr 1 und Zentraldüsenrohr 4 kann innerhalb oder außerhalb des Gaszuführungsrohres 1 erfolgen, wofür entsprechende Schließ- und Regelungsvorrichtungen vorgesehen sind.

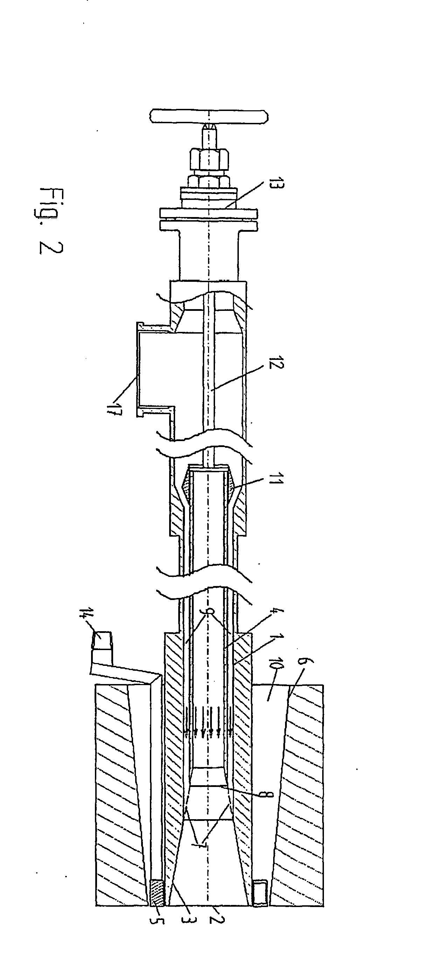

In Fig. 2 ist die Regelung innerhalb des Gaszuführungsrohres 1 dargestellt. Zwischen Gasrohr 1 und Zentraldüsenrohr 4 ist ein axial verschiebbarer Konus 11 angeordnet, der mit einer Schräge der Innenwandung des Gaszuführungsrohres 1 zusammenwirkt und den Ringspalt 9 zwischen beiden regeln und in extremer Einstellung vollständig schließen kann. Die axiale Verschiebung des Konus 11 kann über eine Spindel 12 oder andere geeignete Einrichtungen erfolgen, die durch einen Spindelantrieb 13 in Bewegung versetzt wird. Das vollständige Schließen des Ringspaltes 9 stellt den unteren Arbeitspunkt des Injektors dar, d. h., 100% des Gasstromes fließen durch das Zentraldüsenrohr 4. Vollständiges Öffnen des Ringspaltes 9 durch Zurückziehen des Konus 11 entgegen der Strömungsrichtung stellt den oberen Arbeitspunkt mit vollem Brennstoffdurchsatz dar. Die Zwischenstellungen sind durch Verschieben des Konus 11 stufenlos einstellbar.

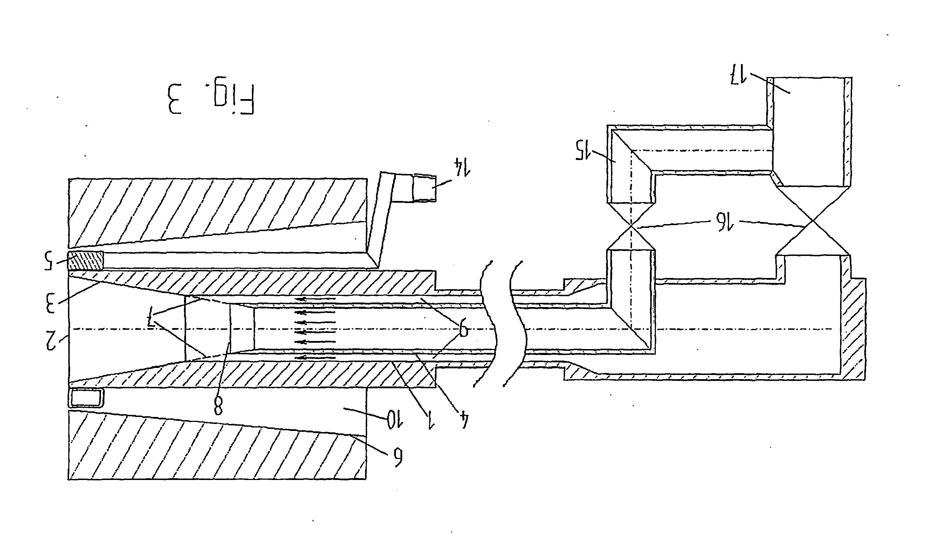

Im zweiten Fall, der in Fig. 3 dargestellt ist, wird der Gesamtgasstrom vor Eintritt in das Gaszuführungsrohr 1 leitungstechnisch aufgeteilt. Ein Nebengaszuführungsrohr 15 zweigt von einer in das Gaszuführungsrohr 1 mündenden Gesamtgaszuführung 17 ab und beschickt direkt das Zentraldüsenrohr 4. In jeder der beiden Zuführungsleitungen befindet sich ein Ventil 16 zur Einstellung des jeweiligen Teilgasstromes. Beide Teilströme, sowohl der durch den Ringspalt 9 als auch der durch das Zentraldüsenrohr 4 sind durch die separat angeordneten Ventile 16 zu 100 % abschaltbar und dazwischen stufenlos einstellbar. Andere Schließ- und Regelungsvorrichtungen sind denkbar.

### Liste der verwendeten Bezuciszeichen

- 1: Gaszuführungsrohr
- 2: Mündung Langdiffusor
- 3: Langdiffusor
- 4: Zentraldüsenrohr
- 5: wassergekühlter Ring
- 6: Brennereinsatzöffnung
- 7: gedachte Verlängerung der Mantellinie des Zentraidüsenrohrs
- 8: Mündung Zentraldüsenrohr
- 9: Ringspalt
- 10: Freiraum
- 11: Konus
- 12: Spindel
- 13: Spindelantrieb
- 14: Kühlwasseranschluss
- 15: Nebengaszuführungsrohr
- 16: Ventil
- 17: Gesamtgaszuführung

## Patentansprüche

1. Brenngasinjektor zur stickoxidmindernden Befeuerung regenerativ beheizter Industrieöfen mit einem Gaszuführungsrohr (1) und einer Mündung (2) wobei deren Verbindung einen Langdiffusor (3) mit einem Freistrahlöffnungswinkel bildet, **dadurch gekennzeichnet, dass** das Verhältnis des Durchmessers der Mündung (2) und des Durchmessers des Gaszuführungsrohres (1) kleiner als drei ist und innerhalb des Gaszuführungsrohres (1) ein Zentraldüsenrohr (4) mit einer den Freistrahlöffnungswinkel bildenden Mündung unter Ausbildung eines Ringspaltes (9) zum Führen eines Teilgasstromes zwischen Gaszuführungsrohr (1) und Zentraldüsenrohr (4) so angeordnet ist, dass die gedachte Verlängerung einer Mantellinie (7) der Zentraldüsenrohrmündung (8) in die Mantellinie des Langdiffusors (3) übergeht, wobei das Gaszuführungsrohr (1) und das Zentraldüsenrohr (4) an eine Schließ- und Regelungsvorrichtung für eine Teilgasstromeinstellung angeschlossen sind.

2. Brenngasinjektor nach Anspruch 1, **dadurch gekennzeichnet, dass** die Schließvorrichtung aus zwei separaten Ventilen besteht, die in einem Gesamtgaszuführungsrohr (17) und in einem davon abgezweigten Nebengaszuführungsrohr (15), das direkt das Zentraldüsenrohr (4) beschickt, angeordnet sind.

3. Brenngasinjektor nach Anspruch 1, **dadurch gekennzeichnet, dass** die Schließvorrichtung als ein auf dem Außenumfang des Zentraldüsenrohres (4) axial verschiebbarer und mit einer konischen Fläche der Innenwandung des Gaszuführungsrohres (1) zusammenwirkender Konus (11) ausgebildet ist.

4. Brenngasinjektor nach einem der Ansprüche 1 bis 3, **dadurch gekennzeichnet, dass** die Schließvorrichtung (11; 16) um mehr als das fünffache des Innendurchmessers des Zentraldüsenrohres (4) von dessen Mündung (8) entgegen der Strömungsrichtung zurückgesetzt angeordnet ist.

5. Brenngasinjektor nach einem oder mehreren der vorhergehenden Ansprüche, **dadurch gekennzeichnet, dass** die Mündung (2) des Langdiffusors (3) an ihrem Außenumfang mit einem wassergekühlten Ring (5) ausgestattet ist.

6. Brenngasinjektor gemäß Anspruch 5, **dadurch gekennzeichnet, dass** der wassergekühlte Ring (5) separat angeordnet ist.

7. Brenngasinjektor gemäß Anspruch 5 oder 6, **dadurch gekennzeichnet, dass** der wassergekühlte Ring (5) um die Achse des Gasinjektors drehbar ist.

8. Industrieofen aufweisend einen Verbrennungsraum mit einer Brennereinsatzöffnung (6), in der ein Brenngasinjektor nach einem der Ansprüche 1 bis 7 angeordnet ist, sowie mit einer separaten Verbrennungsluftzuführung.

9. Industrieofen nach Anspruch 8, **dadurch gekennzeichnet, dass** der Langdiffusor (3) und ein wassergekühlter Ring (5) zusammen in einer entgegen der Gasströmungsrichtung sich erweiternden Brennereinsatzöffnung (6) so angeordnet sind, dass ein Abstand zwischen dem wassergekühlten Ring (5) und der Brennereinsatzöffnung (6) minimal ist und die Achse des Gasinjektors um den Mittelpunkt der Mündung (2) drehbar ist.

10. Industrieofen nach Anspruch 9 **dadurch gekennzeichnet, dass** der wassergekühlte Ring (5) einen kontaktfreien Abschluss der Brennereinsatzöffnung (6) am Mündungsbereich des Brenngasinjektors bildet.

## Claims

1. Fuel gas injector for the nitric oxide-reducing firing of regeneratively heated industrial furnaces, having a gas supply pipe (1) and a nozzle (2), the connection of which forms a long diffuser (3) with a free jet aperture angle, **characterised in that** the ratio of the diameter of the nozzle (2) to the diameter of the gas supply pipe (1) is less than three and a central pipe (4) with a nozzle forming the free jet aperture angle is arranged within the gas supply pipe (1), thereby forming an annular gap (9) for guiding a partial gas current between the gas supply pipe (1) and central pipe (4) so that the imaginary extension of a generatrix (7) of the central pipe nozzle (8) merges into the generatrix of the long diffuser (3), while the gas supply pipe (1) and the central pipe (4) are connected to a closing and regulating device for obtaining a partial gas current.

2. Fuel gas injector according to claim 1, **characterised in that** the closing device consists of two separate valves which are arranged in a general gas supply pipe (17) and in a secondary gas supply pipe (15) branching off it which directly supplies the central pipe (4).

3. Fuel gas injector according to claim 1, **characterised in that** the closing device is configured as a cone (11) which is axially movable over the outer circumference of the central pipe (4) and cooperates with a conical surface of the inner wall of the gas supply pipe (1).

4. Fuel gas injector according to one of claims 1 to 3, **characterised in that** the closure device (11; 16) is arranged so as to be offset from the nozzle (8) of the central pipe (4) counter to the direction of flow by more than five times the internal diameter of said central pipe (4).

5. Fuel gas injector according to one or more of the preceding claims, **characterised in that** the nozzle (2) of the long diffuser (3) is fitted with a water-cooled ring (5) at its outer circumference.

6. Fuel gas injector according to claim 5, **characterised in that** the water-cooled ring (5) is mounted separately.

7. Fuel gas injector according to claim 5 or 6, **characterised in that** the water-cooled ring (5) is rotatable about the axis of the gas injector.

8. Industrial furnace comprising a combustion chamber having a burner feed opening (6) in which a fuel gas injector according to one of claims 1 to 7 is arranged, and having a separate supply of air for combustion.

9. Industrial furnace according to claim 8, **characterised in that** the long diffuser (3) and a water-cooled ring (5) are arranged together in a burner feed opening (6) that widens out counter to the direction of gas flow such that there is a minimal spacing between the water-cooled ring (5) and the burner feed opening (6) and the axis of the gas injector is rotatable about the centre of the nozzle (2).

10. Industrial furnace according to claim 9, **characterised in that** the water-cooled ring (5) forms a contactless closure of the burner feed opening (6) at the nozzle region of the fuel gas injector.

## Revendications

1. Injecteur à gaz de combustion pour le fonctionnement, avec réduction des oxydes d'azote, de fours industriels chauffés de manière régénérative, avec un tuyau d'alimentation en gaz (1) et une embouchure (2), leur liaison formant un diffuseur long (3) et un angle d'ouverture de jet libre, **caractérisé en ce que** le rapport entre le diamètre de l'embouchure (2) et le diamètre du tuyau d'alimentation en gaz (1) est inférieur à trois et, à l'intérieur du tuyau d'alimentation en gaz (1), un tuyau de buse centrale (4) avec une embouchure formant l'angle d'ouverture de jet libre, en réalisant un interstice annulaire (9) pour le guidage d'un écoulement partiel de gaz entre le tuyau d'alimentation en gaz (1) et le tuyau de buse centrale (4), est disposé de façon à ce que le prolongement imaginaire d'une ligne de revêtement (7) de l'embouchure du tuyau de buse centrale (8) est aligné avec la ligne de revêtement du diffuseur long (3), le tuyau d'alimentation en gaz (1) et le tuyau de buse centrale (4) sont reliés à un dispositif de fermeture et de régulation pour un réglage de l'écoulement de gaz partiel.

2. Injecteur de gaz de combustion selon la revendication 1, **caractérisé en ce que** le dispositif de fermeture est constitué de deux vannes séparées, qui sont disposées dans un tuyau d'alimentation en gaz général (17) et un tuyau d'alimentation en gaz secondaire (15) qui bifurque de celui-ci, et qui alimente directement le tuyau de buse centrale (4).

3. Injecteur de gaz de combustion selon la revendication 1, **caractérisé en ce que** le dispositif de fermeture est conçu comme un cône (11) pouvant coulisser axialement sur la périphérie externe du tuyau de buse centrale (4) et interagissant avec une surface axiale de la paroi interne du tuyau d'alimentation en gaz (1).

4. Injecteur de gaz de combustion selon l'une des revendications 1 à 3, **caractérisé en ce que** le dispositif de fermeture (11 ; 16) est disposé en retrait, de plus de cinq fois le diamètre interne du tuyau de buse centrale (4), de son embouchure (8) à l'encontre la direction d'écoulement.

5. Injecteur de gaz de combustion selon l'une des revendications précédentes, **caractérisé en ce que** l'embouchure (2) du diffuseur long (3) est munie, sur sa périphérie externe, d'une bague (5) refroidie par eau.

6. Injecteur de gaz de combustion selon la revendication 5, **caractérisé en ce que** la bague (5) refroidie par eau est disposée séparément.

7. Injecteur de gaz de combustion selon la revendication 5 ou 6, **caractérisé en ce que** la bague (5) refroidie par eau est rotative autour de l'axe de l'injecteur de gaz.

8. Four industriel comprenant une chambre de combustion avec une ouverture d'alimentation de brûleur (6), dans laquelle se trouve un injecteur à gaz de combustion selon l'une des revendications 1 à 7, ainsi qu'une alimentation d'air de combustion séparée.

9. Four industriel selon la revendication 8, **caractérisé en ce que** le diffuseur long (3) et une bague (5) refroidie par eau sont disposés ensemble dans une ouverture d'alimentation de brûleur (6) s'élargissant à l'encontre de la direction de l'écoulement de gaz, de façon à ce qu'une distance entre la bague (5) refroidie par eau et l'ouverture d'alimentation de brûleur (6) est minimale et l'axe de l'injecteur de gaz est rotatif autour du point central de l'embouchure (2).

10. Four industriel selon la revendication 9, **caractérisé en ce que** la bague (5) refroidie par eau forme une terminaison sans contact de l'ouverture d'alimentation de brûleur (6) au niveau de l'embouchure de l'injecteur de gaz de combustion.
